# EUROPEAN PATENT APPLICATION

(11) **EP 3 696 741 A1**
(43) Date of publication of application: **19.08.2020**
(21) Application number: 20157239.3
(22) Date of filing: 13.02.2020
(51) Int. Cl.: G06Q 10/00, G06Q 10/08

(54) **SALES SPACE MAPPING SYSTEM AND RELATED LOCATION OF PRODUCTS PLACED IN SUCH SPACES**

(30) Priority: 15.02.2019 IT 201900002205
(71) Applicant: Nicolis, Stefano, 37069 Villafranca di Verona (VR) (IT)
(72) Inventor: Nicolis, Stefano, 37069 Villafranca di Verona (VR) (IT)

(57) **Abstract**

This invention relates to a system for mapping the sales space and relative localisation of the products placed in these spaces, particularly in a sales outlet, comprising at least one shelf (14) extending longitudinally and suitable for supporting and displaying the articles (80), a central processing device (30) and a mobile processing device (50) operated by a user (90), the central processing devices (30) and mobile (50) being connected and communicating with one another using a telematic communication network (25). The system (10) comprises a longitudinal strip of codes (16) connected to the at least one shelf (14) and arranged parallel to a longitudinal axis of the at least one shelf (14), the strip (16) comprising a number of positional codes (20), where each positional code (20) comprises an identifier of the strip (16) and a longitudinal coordinate which fixes the position of the positional code (20) along the strip (16). The mobile processing device (50) comprises code reading devices (54) configured to read or scan both the positional codes (20) of the strip (16) coupled to the at least one shelf (14) and barcodes of the articles (80). The central processing device (30) comprises a data entry module (38) configured to generate information about the association between an article (80), uniquely identified by a respective barcode, and an area of the at least one shelf (14) where the article (80) is located, uniquely identified by the positional code (20) comprising the identification code of the strip (16) connected to the at least one shelf (14) and the longitudinal coordinate that fixes the position of the positional code (20) along the strip of codes (16).

## Description

This invention relates to a system for mapping the sales space and relative location of the products placed in such spaces; said system is useful and practical in the field of the management and eventual sharing of information relating to the position of various types of commercial products on shelving units in a retail store, namely inside a shop or a sales outlet.

In this description, the term "article" means any product or item of goods available in any sales outlet, offered to potential buyers and suitable for satisfying individual, family or business needs. More generally, the term "article" means any object available in any space, such as a library, a warehouse, and so on, offered to potential recipients, and also in this case suitable for satisfying individual, family or business needs.

Nowadays, there is an increasingly widespread tendency in the commercial sector to reproduce in "physical" shops, namely in sales outlets, an interactive shopping experience similar to that which the buyer, or the potential buyer, experiences when browsing "virtual" online stores.

In this context, an important aspect is the management of the planogram of the articles, where the planogram is a diagram or model that indicates the position of commercial products on the shelving units of a shop. In fact, it is well known that the owners of various brands conclude agreements and pay large retail chains to have their product placed in so-called "hot" areas of the shop and arranged in a certain way, for example at a certain height on the shelving unit and/or near other products. For this reason, the headquarters of large hypermarkets need to manage and enforce the indications on the planogram in their various sales outlets, which are the result of agreements with the aforementioned brand owners. Another important aspect consists in letting both seller users, such as store managers, shop assistants, and so on, and buyer users know where a commercial product is located, namely its position, so that it can be found quickly if required. In particular, knowing the precise position of a commercial product is crucially important for the seller user who, on a logistic level, must organise the stocking of the items on shelves.

Another important aspect is being able to quickly find more detailed information, including typically the sale price, relating to the commercial products available within the store.

Currently, it is well known that physical stores use electronic labels, displays on which static images, audio-visual content and/or product information appear, or even information totems that allow the buyer to look for information, including also the position in a store, relating to the products they are interested in.

It is equally well known that physical stores sometimes use geopositioning systems for commercial products, typically using electronic geolocation devices associated with the products, which allow the buyer to search for the position of the products they are interested in, for example on shelves.

However, these solutions are not free from drawbacks, including the fact that they in no way allow commercial operators, i.e. seller users, to manage the planogram of the products available, neither at the level of the individual stores nor at the headquarters of the large retail chains.

Another drawback of the known solutions consists in the fact that they do not provide a sufficiently speedy exchange of information relating to the products, and therefore they do not offer the buyer user a degree of interactivity in the shopping experience similar to that provided in virtual stores.

A further drawback of the known solutions consists in the fact that they require an excessively laborious configuration process, typically requiring the navigation of complex menus, with the commercial operators, namely the seller users, losing valuable time as a result.

Furthermore, a disadvantage of these solutions, especially the above-mentioned geolocation systems, consists in the fact that they involve a degree of imprecision regarding the position of a product, making them too inaccurate for this type of application.

The use of an electronic label is known from EP2991017, which is connected to an object to identify its properties; however, this label is not located in the physical space of a shop, and is not related to the mapping of the sales space and the relative location of the products placed in these spaces.

US2009/295592 also shows the division of the sales spaces, each labelled with a label, placed at the front of the space to which it refers, where said label refers to and displays the information of the products placed in said spaces, but if the products are moved, the label must also be moved.

Finally, a geolocation system is shown in EP3188089, where localisation takes place using a robot with GPS onboard; however, this document is silent about how spatial coordinates are established; apparently said coordinates are defined using GPS, with the above-mentioned drawbacks. Furthermore, said robot does not map a physical space according to the solution of the invention, but above all the geolocation method, which employs said robot, turns out to be a very complicated and expensive method, and its implementation requires dedicated technological equipment.

The central task of this invention is to overcome the limits of the prior art set out above, by devising a system for mapping the sales space; where the localisation of the products takes place using the characterising part of the invention.

With regard to this principal task, especially important is the localisation of the position of articles, particularly in a store, which is as precise as possible, thus allowing both the seller user (e.g. for managing the restocking of the shelves), and also the buyer user, to know exactly where the products they are interested in are located, particularly in a store, for example on shelves.

With regard to this task, one object of this invention is to devise a system for locating the position of articles, particularly in a store, which can increase the convergence between the physical store and the virtual store, consequently increasing the degree of interactivity both of the management of the planogram and the information about the items for a seller user, and the purchasing experience of the buyer user in a physical store, or more generally in a physical place. Another object of this invention is to devise a system for locating the position of articles, particularly in a store, which allows you to facilitate the management of the information about the articles in the physical store, or more generally in the physical place, and also the position of the items inside the physical store, or more generally their physical location, in order to provide a quick search and identification of the location.

A further object of this invention is to devise a system for locating the position of items, particularly in a store, which allows you to speed up the exchange of information relating to the products inside a physical store, or more generally inside a physical place.

Another object of this invention is to devise a system for locating the position of articles, particularly in a store, which allows the shelving units to be kept in order, in particular their shelves, while at the same time providing the buyer user with information relating to the products, designed to provide incentives for their sale.

Yet another object of this invention is to make available a system for locating the position of articles, particularly in a store, which is simple and quick to use, i.e. user-friendly.

An equally important object of this invention is to make available a system for locating the position of articles, particularly in a store, which is highly reliable, relatively simple to manufacture, and that is competitively priced when compared to the prior art.

This object, as well as these and other objects that will become more apparent hereinafter, are achieved by a system for mapping the sales space and relative localisation of the products placed in these spaces, identifying the position of these articles (hereinafter also: "position tracking"), particularly in a store, comprising at least a shelf extending longitudinally that is suitable for supporting and displaying said articles, a central processing device and a mobile processing device operated by a user, where said central processing device and said mobile processing device are connected and communicating with one another using a telematic communication network, characterised by the fact that it includes a longitudinal strip of codes associated with said at least one shelf and arranged parallel to a longitudinal axis of said at least one shelf, where each positional code includes an identifier of said strip of codes, and a longitudinal coordinate that fixes the position of said positional code along said strip, where said mobile processing device includes code reading devices configured to read or scan both said positional codes of said strip associated with said at least one shelf, as well as barcodes of said articles; where said central processing device includes a data entry module configured to generate information about the association between an article, uniquely identified by a respective barcode, and an area of said at least one shelf on which said article has been placed, uniquely identified by said positional code comprising said identification code of said strip associated to said at least one shelf and said longitudinal coordinate that fixes the position of said positional code along said strip of codes.

From the explanation of the invention set out above, we can understand that the system of the invention maps articles for sale on a system of physical coordinates that are given by the shelving units and by the sequence of barcodes applied to the shelving units and transfers them into a digital/virtual map to attain the management of the planogram.

The system of the invention, therefore, assigns coordinates to the sales space according to a metric that can be easily recorded digitally and that can be recognised with known devices and instruments. The main attribute of the system is that it can make uniform, namely render homogeneous and compatible, the system for surveying the space of the shelving units with the system for locating the products on sale: both use barcodes.

In other words, the mapping system allows you to measure the coordinates of the space in a manner similar to the system for identifying the products; the mapping system establishes a system of spatial coordinates for mapping the space of the shelving units on which the telematic infrastructure has been fixed. Therefore the telematic infrastructure is inserts and undertakes the management of the planogram in said mapping.

This convergence between said mapping of the space and the localisation of the products within said mapping, just using the barcode, overcomes the drawback of the product geolocation system, namely the use of separate instruments for tracking and identifying the products in the space.

It should be pointed out that the system of the invention, based on the above information, cannot be equipped with a tracking system with a code, and in fact the strip of codes connected to the shelf does not identify objects.

It should also be pointed out that the system of the invention resolves a problem using a technical solution: the mapping of the space with a combination of codes realised through a series of single barcodes arranged in an orderly manner on a strip establishes its own metric for defining and measuring the coordinates.

Below, as already set out previously, the term "system for tracking the position of articles" means: the system for creating a map of the sales space and therefore on said map, rendered digital/virtual, the location of the products to arrive at the management of the planogram

Further characteristics and advantages of the invention will become more apparent from the description of a preferred, but not exclusive, embodiment of the system for tracking the position of articles, particularly in a store, according to the invention, given by way of a non-limiting example with the aid of the attached drawings, in which:
figure 1 is a first schematic view illustrating an embodiment of the system for tracking the position of articles, particularly in a retail store, according to this invention;
figure 2 is a second schematic view partially showing an embodiment of the system for tracking the position of articles, particularly in a retail store, according to this invention;
figure 3 is a third schematic view illustrating an embodiment of the system for tracking the position of articles, particularly in a retail store, according to this invention;
figure 4 is a block diagram that schematically illustrates the mobile processing device of an embodiment of the system for tracking the position of articles, particularly in a retail store, according to this invention;
figure 5 is a block diagram that schematically illustrates the central processing device of an embodiment of the system for tracking the position of articles, particularly in a retail store, according to this invention.

With reference to the figures, the system for tracking the position of articles, particularly in a retail store, according to the invention, indicated globally with the reference number 10, essentially consists of at least a shelf 14 that is suitable for supporting and displaying the articles 80, typically commercial products, a strip of codes 16 associated with the at least one shelf 14, a central processing device 30, and a mobile processing device 50, typically operated by a seller of buyer user 90.

The central processing device 30 and the mobile processing device 50 are connected to one another and communicate with each other using a telematic communication network 25, such as for example a local wireless network or the Internet.

The shelf 14 extends longitudinally, is essentially horizontal, and is typically found inside a store. In a preferred embodiment of the system 10 according to the invention, the shelf 14 is part of a shelving unit 12 inside the store. In another embodiment of the system 10 according to the invention, the shelf 14 is part of a display case inside the store.

The strip of codes 16 of the system 10 for tracking the position of articles 80, particularly in a store, is uniquely identified by a respective identification code. The strip 16 extends horizontally and is connected to the shelf 14. In particular, the strip 16 is parallel to a longitudinal axis of the shelf 14, preferably along the front edge of the shelf 14. In an embodiment of the system 10 according to the invention, the strip 16 can be in the form of an adhesive tape or a mount for attaching electronic labels, and in both cases to be fixed preferably along the front edge of the shelf 14. In another embodiment of the system 10 according to the invention, the strip 16 is moulded directly along the front edge of the shelf 14.

The strip 16 comprises a number of positional codes or tags 20, where each positional code or tag 20 can be read by the mobile processing device 50. The positional codes or tags 20 are arranged at regular intervals along the entire length of said strip 16. Each positional code or tag 20 comprises both a unique identifier of the respective strip of codes 16 as well as a longitudinal coordinate (e.g. measure of length) that establishes the position of the positional code or tag 20 along the strip 16. Therefore, the reading of a positional code or tag 20, as already mentioned using the mobile processing device 50, provides both a unique identifier of the respective strip 16 as well as a longitudinal coordinate, where the information regarding the position of the strip 16 with a specific unique identifier was previously recorded, for example in a database.

Each portion of the strip 16, namely each positional code or tag 20 included therein, corresponds to a respective area of the shelf 14 to which the strip 16 has been fixed, and vice versa. The positional code or tag 20 is configured to define or delimit a portion of the strip 16, and consequently an area of the shelf 14 to which the strip 16 has been attached. The strip 16 is configured to identify, in particular using the respective positional codes or tags 20, an area of the shelf 14 to which the strip 16 has been attached.

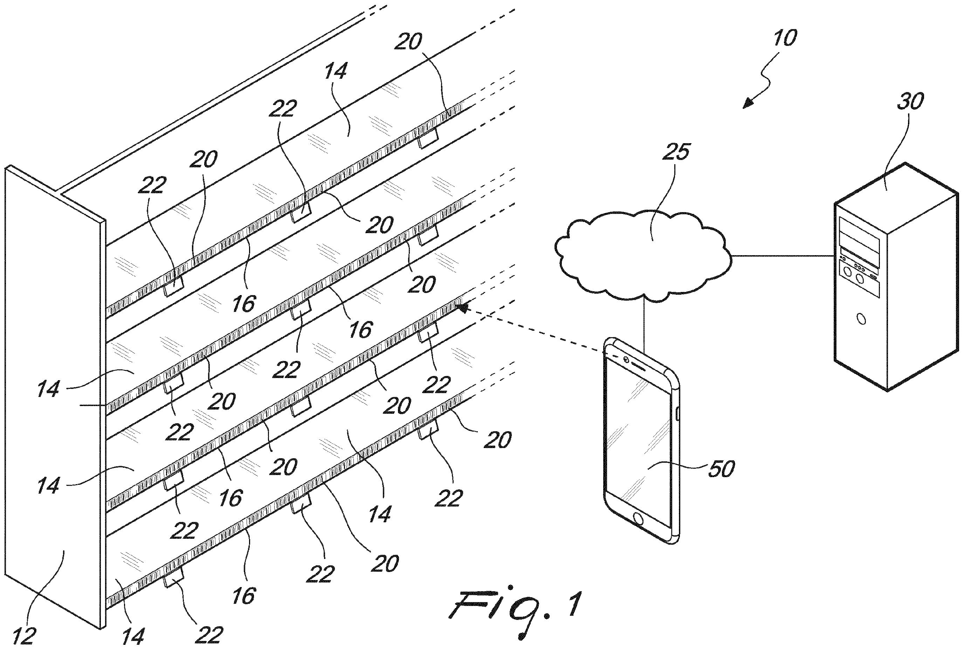

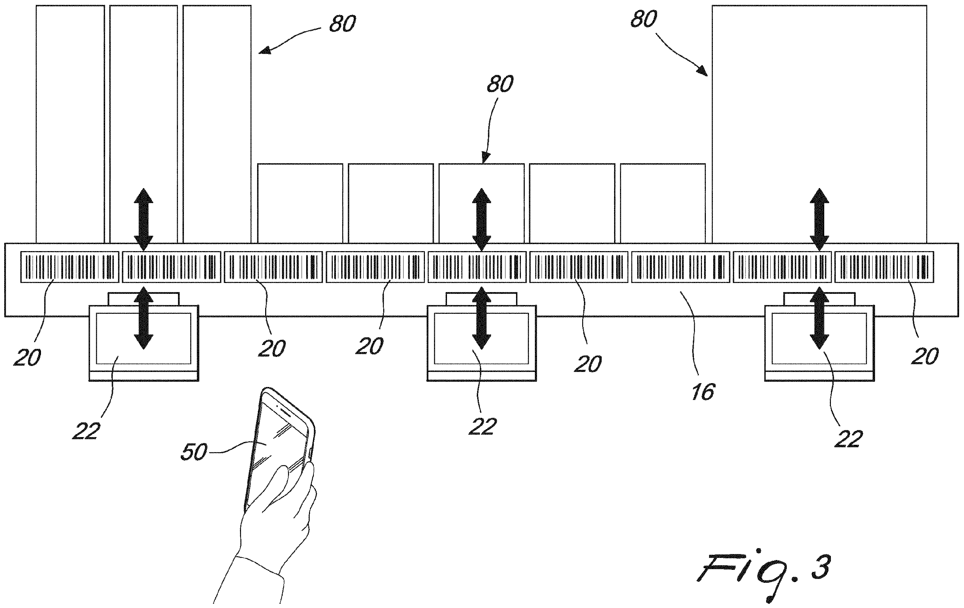

In a preferred embodiment of the system 10 according to the invention, the positional code or tag 20 comprises a static one-dimensional (1D) or two-dimensional (2D) barcode, such as a QR code (Quick Response Code). In another embodiment of the system 10 according to the invention, the positional code or tag 20 comprises a set of alphanumeric characters or special characters. With particular reference to figures 1 and 3, in an embodiment of the invention, the system 10 for tracking the position of articles, particularly in a store, comprises a number of electronic labels 22 along the strip 16. The electronic labels 22 can be fixed to the front edge of the shelf 14 of the shelving unit 12, preferably using a mount.

These electronic labels 22 are configured to display one or more pieces of information (for example name, brand, quantity, price, any discount, barcode, identification code of the electronic label, position, etc.) relating to the articles 80 on the shelf 14 in line with respective positional codes or tags 20 of the strip 16. In an embodiment of the system 10 according to the invention, each of the electronic labels 22 is uniquely identified by a respective identification code.

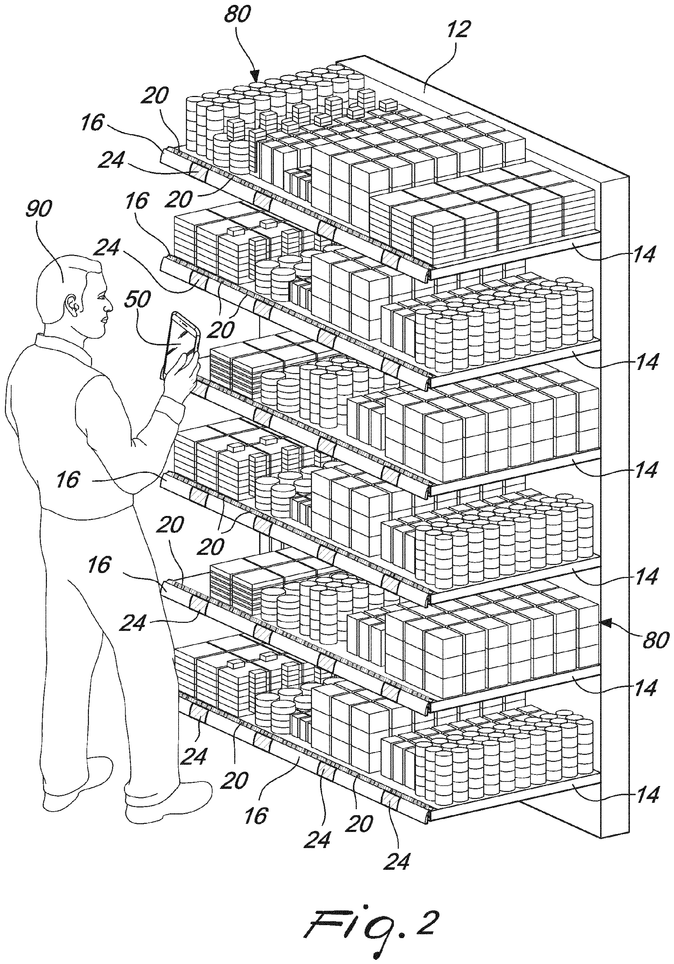

With particular reference to figure 2, in an alternative embodiment of the invention, the system 10 for tracking the position of articles, particularly in a store, comprises a number of paper labels 24 along the strip 16. The paper labels 24 can be attached to the front edge of the shelf 14 of the shelving unit 12, preferably using an adhesive. These paper labels 24 are configured to display one or more pieces of information (for example name, brand, quantity, price, any discount, barcode, etc.) relating to the articles 80 on the shelf 14 in line with their respective positional codes or tags 20 of the strip 16. In an embodiment of the invention, the system 10 for tracking the position of articles, particularly in a store, comprises a digital graphic screen (not shown), for example LCD or OLED, connected to the strip 16. The digital screen can be limited to the front edge of the shelf 14 of the shelving unit 12, preferably by means of a mount base, or placed near the shelving unit 12 or in the centre of a pair of shelving units 12. This digital screen is configured to display one or more pieces of information (for example name, brand, quantity, price, any discount, barcode, identification code of the electronic label, position, etc.) relating to the articles 80 on the shelf 14 in line with respective positional codes or tags 20 of the strip 16. This digital screen can be further configured to display comparative information relating to all the articles 80 on the shelf 14.

Preferably, the digital screen is horizontal and is configured to display in a dynamic length the aforementioned one or more pieces of information relating to the articles 80 on the shelf 14 in line with respective codes or positional tags 20 of the strip 16, in particular by displaying the information relating to a single article 80 along a portion of a digital screen corresponding to the area of the shelf 14 of the shelving unit 12 where the single article 80 is located. For example, if an article 80 occupies the area of shelf 14 between a code or tag "a" and a code or tag "d", the digital screen displays the information of the article 80 in the same space, i.e. between the code or tag "a" and the code or tag "d".

In an embodiment of the invention, the system 10 for tracking the position of articles, particularly in a store, comprises a number of markers (not shown) arranged along the strip 16, in particular a marker associated with each positional code or tag 20, where these markers can be easily recognised and identified by the mobile processing device 50, in particular the relative devices for reading codes or tags 54. These markers are configured to facilitate the identification of the positional code or tag 20 of the strip 16 by the code or tag reading devices 54. In practice, when the devices for reading the codes or tags 54 are pointed towards a strip 16, the mobile processing device 50 recognises the presence of the marker in the acquired image and, subsequently, reads the positional code or tag 20 immediately next to the marker, it decodes the positional code or tag 20 and typically displays one or more pieces of information (e.g. name, brand, quantity, price, any discount, barcode, identification code of the electronic label, position, etc.) relating to the article 80 on the shelf 14 at the positional code or tag 20 of the strip 16.

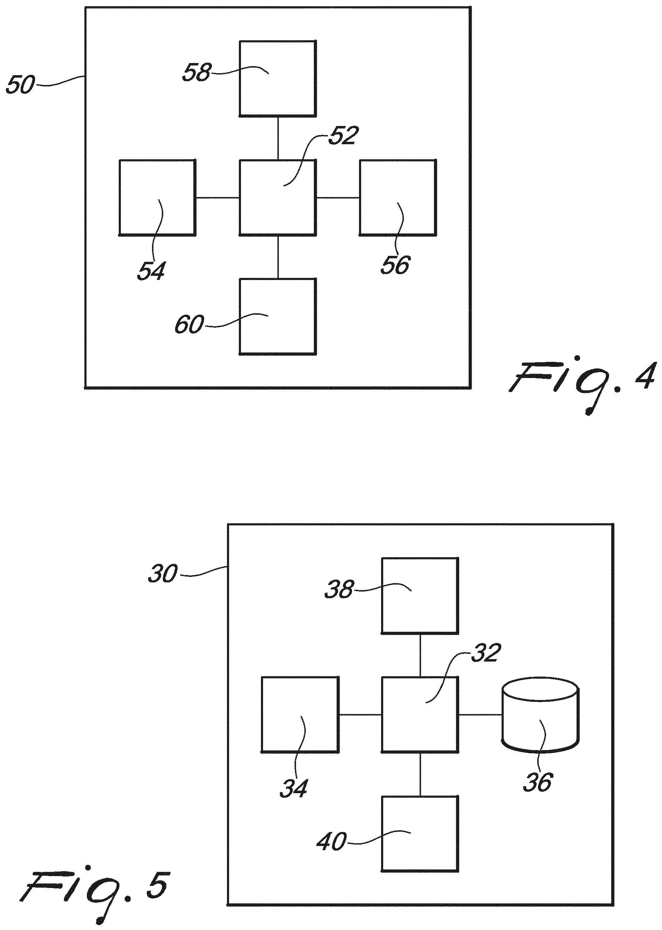

With particular reference to figure 4, the mobile processing device 50 of the system 10 for tracking the position of articles 80, particularly in a store, consists of a control unit 52, devices for reading codes or tags 54, a transceiver 56, display devices 58, and selection devices 60.

The control unit 52 is the main functional element of the mobile processing device 50, and for this reason it is connected to and communicates with the other elements of the mobile processing device 50. The control unit 52 of the mobile processing device 50 is equipped with suitable computing capacity for interfacing with the other elements of the mobile processing device 50, and is configured to command, control and coordinate the operation of the elements of the mobile processing 50 with which it is connected and in communication.

The devices for reading codes or tags 54, such as for example a barcode reader or barcode scanner, of the mobile processing device 50 are configured to read or scan the positional codes or tags 20 of the strip of codes 16, which uniquely identify a respective area of the shelf 14 to which the strip 16 is attached, by means of the unique identifier of the same strip 16 and the longitudinal coordinate of the positional code or tag 20. The code or tag reading devices 54 consist of an optical image capture device, such as a camera. In an embodiment of the system 10 according to the invention, the devices for reading codes or tags 54 are configured to decode the positional code or tag 20, retrieving the unique identifier of the strip 16 and the longitudinal coordinate of the positional code or tag 20, following the viewing or capture of the positional code or tag 20. Moreover, the devices for reading codes or tags 54 are configured to read or scan 80 and/or the identification codes of the electronic labels 22, in particular to be able to then connect them to a respective positional code or tag 20 of the strip 16, i.e. the unique identifier of the strip 16 and the longitudinal coordinate of the positional code or tag 20.

The transceiver 56 of the mobile processing device 50 is configured to establish communication between the latter and the central processing device 30, using the telematic communication network 25. In an embodiment of the system 10 according to the invention, the transceiver 56 is configured to transmit a positional code or tag 20 to the central processing device 30, following the reading or scanning of the positional code or tag 20 by the code or tag reading devices 54. In an embodiment of the system 10 according to the invention, the transceiver 56 is configured to transmit the unique identifier of the strip 16 and the longitudinal coordinate of the positional code or tag 20 to the central processing device 30, following the viewing or capture of the positional code or tag 20 and the retrieval of the respective information from the latter. In an embodiment of the system 10 according to the invention, the transceiver 56 is configured to receive one or more pieces of information (for example name, brand, quantity, price, any discount, barcode, identification code of the electronic label, position, etc.) relating to the articles 80 on the shelf 14 in line with the respective positional codes or tags 20 of the strip 16, following the retrieval of the information by the database 36 of the central processing device 30.

The display devices 58, for example a screen or display, of the mobile processing device 50 are configured to display one or more pieces of information (for example name, brand, quantity, price, any discount, barcode, identification code of the electronic label, position, etc.) relating to the articles 80 on the shelf 14 in line with the respective positional codes or tags 20 of the strip 16. In particular, the display devices 58 are configured to display this information relating to an article 80 following the viewing or capture of the respective positional code or tag 20 and the retrieval of the respective information from the latter. The information relating to the articles 80, displayed by the display devices 58, is transmitted by the central processing device 30, where it is stored, to the mobile processing device 50, in response to the transmission by the latter of the positional code or tag 20 or the unique identifier of the strip 16 and the longitudinal coordinate of the positional code or tag 20.

The selection devices 60, such as a graphic touch interface or a group of buttons, of the mobile processing device 50 are configured to allow interaction between the user seller or buyer 90 and the system 10 for tracking the position of articles, especially in a store. In an embodiment of the system 10 according to the invention, the selection devices 60 are configured to interface with the data entry module 38 of the central processing device 30, assisting a seller user 90 in loading data and information in the database 36 of the central processing device 30, typically when stocking the shelves 14 and positioning the articles 80. In an embodiment of the system 10 according to the invention, the selection devices 60 are configured to interface with the data sharing module 40 of the central processing device 30, helping a buyer user 90 in searching for and selecting an article 80 they are interested in.

Advantageously, the mobile processing device 50 is configured to support the buyer user 90 in identifying the position of an article 80 in the store. In particular, once the user buyer 90 has selected the article 80 that they are interested in, using the selection devices 60, they can go to the zone where the shelving units 12 are that contain similar articles and, once there, the code or tag reading devices 54 read or scan all the positional codes or tags 20 of all the strips 16 in the vicinity. On the basis of the information contained in the positional codes or tags 20, the mobile processing device 50 is configured to retrieve the information relating to the article 80 selected, including its precise position in the store, namely the area of the shelf 14 where it is located, and to guide the buyer user 90 towards the article 80 selected on the shelf 14, displaying the instructions for finding the position of the respective positional code or tag 20 of the strip 16, for example using the display devices 58.

In a typical embodiment of the invention 10 for tracking the position of articles 80, particularly in a store, the mobile processing device 50 can be in the form of a smartphone or a tablet.

In another embodiment of the invention 10 for tracking the position of articles 80, particularly in a store, the mobile processing device 50 can be in the form of pair of augmented reality glasses, like Google Glasses, or similar HMD (Head-Mounted Display) devices. In particular, the augmented reality glasses 50 are configured to read or scan the positional codes or tags 20 of the nearest strip 16, which uniquely identify a respective area of the shelf 14 to which the strip is connected. Furthermore, the augmented reality glasses 50 are configured to display, for example using the display devices 58, one or more pieces of information (for example name, brand, quantity, price, any discount, barcode, identification code of the electronic label, position, etc.) regarding the articles on the shelf 14 in line with the respective positional codes or tags 20 of the strip 16 and/or the instructions for finding the position of the positional code or tag 20 of the strip 16, and consequently the position of the relevant article 80 on the shelf 14. For example, the buyer user 90 who is looking for a particular article 80 can go to the zone where there are shelving units containing similar articles 80 and, once there, the tag or code reading devices of the glasses read or scan all the positional codes or tags 20 of all the strips 16 in the vicinity, retrieve the information contained in the positional codes or tags 20, and highlight on the glasses the position of the article 80 they are interested in.

In yet another embodiment of the system 10 according to the invention, the seller or buyer device, configured to read or scan the positional codes or tags 20 of the nearest strip 16, which uniquely identify a respective area of the shelf 14 to which the strip 16 is associated, and then to direct a mobile laser pointer indicating the position of the positional code or tag 20 of the strip 16, and consequently the position of the article 80 on the shelf 14.

With particular reference to figure 5, the central processing device 30 of the system 10 for tracking the position of articles 80, particularly in a store, comprises a control unit 32, a transceiver 34, a database 36, a data entry module 38, and optionally a data sharing module 40.

The control unit 32 is the main functional element of the central processing device 30, and for this reason it is connected and in communication with the other elements in the central processing device 30. The control unit 32 of the mobile processing device 30 is equipped with suitable computing capacity for interfacing with the other elements of the mobile processing device 30, and is configured to command, control and coordinate the operation of the elements of the mobile processing 30 with which it is connected and in communication.

The transceiver 34 of the central processing device 30 is configured to establish communications between the latter and the mobile processing device 50, using the telematic communication network 25. In an embodiment of the system 10 according to the invention, the transceiver 34 is configured to receive a positional code or tag 20 coming from the central processing device 50, following the viewing or capture of the positional code or tag 20 by the code or tag reading devices 54. In an embodiment of the system 10 according to the invention, the transceiver 34 is configured to receive the unique identifier of the strip 16 and the longitudinal coordinate of the positional code or tag 20 coming from the mobile processing device 50, following the viewing or capture of the positional code or tag 20 and the retrieval of the respective information from the latter. In an embodiment of the system 10 according to the invention, the transceiver 34 is configured to transmit to the mobile processing unit 50 one or more pieces of information (for example name, brand, quantity, price, possible discount, barcode, identification code of the electronic label, position, etc.) relating to the articles 80 on the shelf 14 at the respective positional codes or tags 20 of the strip 16, following the retrieval of this information from the database 36. In particular, the transceiver 34 is configured to transmit the information relating to the selected article 80 to the mobile processing device 50, including its precise position in the store, i.e. the area of the shelf 14 where it can be found.

The database 36 of the central processing device 30, for example a database stored on suitably sized storage media, is configured to store the identification codes of all the strips 16 associated with the positions of the respective shelves 14 of the store, to which the aforesaid strips 16 are connected. Therefore, the database 36 contains the information regarding the position (for example in which shelving unit 12 and on which shelf 14) in the store where the strip 16 is located with a specific identification code. Furthermore, the database 36 is configured to store the information (for example name, brand, quantity, price, possible discount, barcode, identification code of the electronic label, position, etc.) of all the articles 80 on the shelves 14 in the store.

The database 36 is configured to store information associating an article 80, typically uniquely identified by the respective barcode, and the area of the shelf 14 where the article 80 has been placed, uniquely identified by the respective positional code or tag 20 of the strip 16, i.e. from the pair comprising the identification code of the strip 16 coupled to the shelf 14, whose position in the store is known, as well as the longitudinal coordinate that fixes the position of the positional code or tag 20 along the strip 16. Therefore, this association information pairs an article 80 and the area of the shelf 14 on which the article 80 has been placed, using the respective identification codes of the two elements.

In an embodiment of the system 10 according to the invention, the database 36 is configured to store information associating an article 80, typically uniquely identified by the respective barcode, the area of the shelf 14 on which the Article 80 has been placed, uniquely identified by the respective positional code or tag 20 of the strip 16, and the electronic label 22, uniquely identified by the respective identification code. Therefore, this information associates an article 80, the area of the shelf 14 on which the article 80 has been placed and the electronic label 22 relating to the article 80, using the respective identification codes of the three elements.

The data entry module 38 of the central processing device 30 is configured to load the data and information into the database 36, typically during the stacking of the shelves 14 and when the articles 80 are being positioned. In particular, the data entry module 38 is configured to generate information associating an article 80, typically uniquely identified by the respective barcode, and the area of the shelf 14 on which the article 80 has been placed, uniquely identified by the respective positional code or tag 20 of the strip 16, i.e. from the pair comprising the identification code of the strip 16 associated with the shelf 14, whose position in the store is known, as well as the longitudinal coordinate that fixes the position of the positional code or tag 20 along the strip 16. Therefore, this association information pairs an article 80 and the area of the shelf 14 on which the article 80 has been placed, using the respective identification codes of the two elements.

In an embodiment of the system 10 according to the invention, the database 38 is configured to generate information associating an article 80, typically uniquely identified by the respective barcode, the area of the shelf 14 on which the article 80 has been placed, uniquely identified by the respective positional code or tag 20 of the strip 16, and the electronic label 22, uniquely identified by the respective identification code. Therefore, this information associates an article 80, the area of the shelf 14 on which the article 80 has been placed and the electronic label 22 relating to the article 80, using the respective identification codes of the three elements.

In a preferred embodiment of the system 10 according to the invention, the data entry module 38 is controlled by the user seller or buyer 90 indirectly using the mobile processing device 50, in particular the relative display devices 58 and selection devices 60; in this case, the data entry module 38 is configured to interface with the mobile processing device 50, for example a smartphone or tablet, of the seller user 90 in loading data and information into the database 36 of the central processing device 30, typically during the stocking of the shelves 14 and the placement of the articles 80. In another embodiment of the system 10 according to the invention, the data entry module 38 is controlled by the seller or buyer user 90 directly using the central processing device 30.

Beforehand, an installer pairs at least one longitudinal code strip 16 to at least one shelf 14, for example a shelving unit 12 or a shop display, and loads into the database 36, using the data entry module 38, the identification codes of all the strips 16 associated with the positions of the respective shelves 14 of the store, to which the aforementioned strips 16 are paired.

This operation, carried out only once and upon installation of the strips 16, allows you to store the information of the position in the store (for example in which shelving unit 12 and on which shelf 14) where the strip 16 with a specific identification code is located. When the operator of the store, i.e. the seller user 90, places an article 80 on the shelf 14 of a shelving unit 12 or a display case, they scan the barcode of the article 80, the positional code or tag 20 of the strip 16, corresponding to the area of the shelf 14 on which the article 80 has been placed, and the identification code of any electronic label 22 using the mobile processing device 50, in particular the devices for reading the codes or tags 54.

At this point, the mobile processing device 50 sends the respective identification codes of the two or three elements to the central processing device 30, in particular the data entry module 38, using the transceiver 56.

By combining this input information, i.e. the respective identification codes of the two or three elements, the data entry module 38 generates the aforementioned association information for the article 80, the area of the shelf 14 on which the article 80 has been placed and any electronic label 22.

In practice, using at least one photograph it is possible to associate the article 80, its position in the store and any electronic label 22, and advantageously it is possible to automatically update the electronic label 22.

The data sharing module 40 of the central processing device 30 is configured to interface with the mobile processing device 50, for example a smartphone or tablet, of the buyer user 90 in the search for and selection of an article 80 they are interested in, sharing one or more pieces of information (for example name, brand, quantity, price, possible discount, bar code, identification code of the electronic label, position, etc.) relating to the articles 80 on the shelf 14, in line with the respective positional codes or tags 20 of the strip 16, a data sharing module 40 is configured to share with the mobile processing device 50 the information relating to the selected article 80, including its precise position in the store, i.e. the area of the shelf 14 where the article 80 is located.

As mentioned above, once the buyer user 90 has selected the article 80 they are interested in, using the selection devices 60 of the mobile processing device 50, they can go to the area where there are shelves 12 containing similar articles 80 and, once there, the code or tag reading devices 54 of the mobile processing device 50 reads or scans all the positional codes or tags 20 of all the strips 16 in the vicinity. Based on the information contained in the positional codes or tags 20, the mobile processing device 50 is configured to retrieve the information relating to the selected article 80, including its precise position in the store, i.e. the area of the shelf 14 where the article 80 is located, and to guide the buyer user 90 towards the selected article 80 on the shelf 14, displaying the instructions for tracing the position of the respective positional code or tag 20 of the strip 16, for example using the displays 58.

In practice it has been observed that the invention fully achieves the intended aims and objects. In particular, it has been seen how the system for tracking the position of articles, particularly in a store, devised in this way, allows the qualitative limits of the prior art to be overcome, as it is as accurate as it can be and thus allows both the seller (for example for managing the stocking of the shelving units) and the buyer to know exactly the position of the products they are interested in, particularly in a store, for example on the shelves.

An advantage of the system for tracking the position of articles, particularly in a store, according to the present invention consists in the fact that it allows you to increase the convergence between the physical store and the virtual store, consequently increasing the degree of interactivity and the management of the planogram and information of the items by a seller, as well as the purchasing experience of the buyer in a physical store, or more generally in a physical place.

Another advantage of the system for tracking the position of articles, particularly in a store, according to the present invention consists in the fact that it allows you to facilitate the management of the information of the articles in the physical store, or more generally in the physical place, and the location of the items within the physical store, or more generally in the physical location, to subsequently allow them to be searched for and located quickly.

A further advantage of the system for tracking the position of articles, particularly in a store, according to the present invention, consists in the fact that it allows you to speed up the exchange of information relating to the products inside a physical store, or more generally within a physical place.

Another advantage of the system for tracking the position of articles, particularly in a store, according to the present invention consists in the fact that it allows you to keep the shelving units in order, in particular the shelves themselves, while at the same time giving the buyer information about the products that are designed to encourage their purchase.

Furthermore, an advantage of the system for tracking the position of articles, particularly in a store, according to the present invention consists in the fact that it is simple and quick to use, namely user-friendly.

Although the system for tracking the position of articles according to the invention was designed in particular for the management and possible sharing of information relating to the position of various commercial products on the shelves of a sales outlet, in short inside a store, it can still be used, more generally, for the management and eventual sharing of information relating to the position of any item placed in any space, such as a library, a warehouse, and so on.

The invention, devised in this way, is open to numerous modifications and variations, all of which are within the scope of the inventive concept. Furthermore, all the elements may be replaced by other technically equivalent elements.

In practice, the materials used could be of any type, so long as they are compatible with the specific use, as well as the contingent shapes and dimensions, according to requirements and the state of the art.

In conclusion, the protection provided for the claims must not be limited by the preferred illustrations or embodiments illustrated in the description in the form of examples, but rather the claims must include all the patentable novelties residing in this invention, including all the characteristics that would be treated as equivalent by a person skilled in the art

## Claims

1. Mapping of the sales space and relative localisation of the products placed in these spaces, identifying the position of these items, particularly in a store, comprising at least one longitudinal shelf (14) designed to support and display these items (80), a central processing device (30) and a mobile processing device (50) operated by a user (90), where said central processing device (30) and said mobile processing device (50) are mutually connected and communicate with one another using a telematic communication network (25), **characterised by** the fact that it comprises a longitudinal strip of codes (16) connected to said at least one shelf (14) and arranged parallel to a longitudinal axis of said at least one shelf (14), where said strip of codes (16) comprises a number of positional codes (20), where each positional code (20) comprises an identifier of said strip (16) and a longitudinal coordinate fixing the position of said positional code (20) along said strip (16); said mobile processing device (50) comprises code reading devices (54) configured to read or scan both said positional codes (20) of said strip (16) connected to said at least one shelf (14), as well as barcodes of said articles (80); said central processing device (30) comprises a data entry module (38) configured to generate information about the association between an article (80), uniquely identified by a respective barcode, and an area of said at least one shelf (14) where said article (80) is located, uniquely identified by said positional code (20) comprising said identification code of said strip (16) coupled to said at least one shelf (14) and said longitudinal coordinate fixing the position of said positional code (20) along said strip (16).

2. Mapping of the sales space and relative localisation of the products placed in these spaces, identifying the position of these articles, particularly in a store, according to claim 1, **characterised by** the fact that said positional codes (20) of said strip (16) include a one-dimensional or two-dimensional static barcode, or a set of alphanumeric characters or special characters.

3. Mapping of the sales space and relative localisation of the products placed in these spaces, identifying the position of these articles, particularly in a store, according to claim 1 or 2, **characterised by** the fact that it further includes a number of electronic labels (22) along said strip (16), where said electronic labels (22) are configured to display one or more pieces of information relating to said articles (80) on said at least one shelf (14) in line with respective positional codes (20) of said strip (16).

4. Mapping of the sales area and relative localisation of the products placed in these spaces, identifying the position of these items, particularly in a store, according to claim 3, **characterised by** the fact that said electronic labels (22) are uniquely identified by respective identification codes, said code reading devices (54) of said mobile processing device being further configured to read or scan said identification codes of said electronic labels (22), where said input module (38) is further configured to generate said information regarding the association between said article (80), said area of said at least one shelf (14) where said article (80) is located, and an electronic label (22), uniquely identified by a respective identification code.

5. Mapping of the sales space and relative localisation of the products placed in these spaces, identifying the position of these items, particularly in a store, according to any of the preceding claims, **characterised by** the fact that it further comprises a digital graphic screen associated with said strip (16), where said digital graphic screen is configured to display one or more pieces of information relating to said articles (80) on said at least one shelf (14) in line with respective positional codes (20) of said strip (16).

6. Mapping of the sales space and relative location of the products placed in these spaces, identifying the position of these items, particularly in a store, according to claim 5, **characterised by** the fact that said digital graphic screen extends longitudinally and is configured to display in a dynamic length said information relating to said articles (80) on said at least one shelf (14) in line with respective positional codes (20) of said strip (16), displaying information relating to a single article (80) along a portion of said digital graphic screen corresponding to said area of said at least one shelf (14) where said article (80) is located.
